# EUROPEAN PATENT SPECIFICATION

(11) **EP 4 594 820 B1**
(45) Date of publication and mention of the grant of the patent: **20.05.2026**
(21) Application number: 22793557.4
(22) Date of filing: 28.09.2022
(51) Int. Cl.: G03B 17/04, G02B 7/02, G03B 30/00, G02B 15/14, G02B 7/09

(54) **OPTICAL ARRANGEMENT FOR ELECTRONIC APPARATUS**
OPTISCHE ANORDNUNG FÜR EIN ELEKTRONISCHES GERÄT
AGENCEMENT OPTIQUE POUR APPAREIL ÉLECTRONIQUE

(43) Date of publication of application: 06.08.2025
(73) Proprietor: Huawei Technologies Co., Ltd., Shenzhen, Guangdong 518129 (CN)
(72) Inventor: VIRTA, Markus, 16440 Kista (SE)
(74) Representative: Pfenning, Meinig & Partner mbB
(86) International application number: PCT/EP2022/076971
(87) International publication number: WO 2024/067962

(56) References cited:
- WO-A1-2004/086113
- WO-A2-2022/190049
- KR-A- 20080 044 525

## Description

### TECHNICAL FIELD

The disclosure relates to an optical arrangement for an electronic apparatus, the optical arrangement comprising a first optics group and a second optics group together defining an optical axis. An actuating unit is configured to generate movement of at least the first optics group from a retracted position to an extended position along the optical axis.

### BACKGROUND

Telescopic camera optics using retracting and protruding lens systems to achieve longer focal length cameras having, e.g., zoom or telephoto functions, have existed for many years in the digital still camera industry. These solutions, however, require higher level miniaturization and robustness to be able to be used in smaller apparatuses such as smartphones.

Nevertheless, the resulting apparatus is still thick and bulky. It may not have the required durability against mechanical impact that is expected from a product used in daily life such as a phone. It also may require strengthening of the phone frame or housing to be able to withstand the forces created by the protruding optics, for example, to protect the display unit or the battery from damage. Furthermore, existing solutions either accept that some undesirable clearances exist within the optical arrangement, or they comprise additional components designed to remove those clearances.

Hence, there is a need for an improved optical arrangement for electronic apparatuses such as smartphones. KR2008 0044525 A discloses a camera module configured to control the distance between a lens and an image sensor by pushing a lens holder. The lens holder is retractable and a rotation spacer elastically supported by a spring controls the distance between the lens and the image sensor by pushing the lens holder. WO 2004/086113 A1 discloses an imaging module having an upper portion and an under portion that are movable with respect to each other, with the upper portion holding a lens and having a rotatably arranged rotor. Each time the upper portion is pressed towards the under portion and subsequently released, protrusions are received by another slot so that the distance between the lens and the image sensor chip can be varied.

### SUMMARY

It is an object to provide an improved optical arrangement. The foregoing and other objects are achieved by the features of the independent claims. Further implementation forms are apparent from the dependent claims, the description, and the figures.

According to a first aspect, there is provided an optical arrangement for an electronic apparatus, the optical arrangement comprising a first optics group and a second optics group together defining an optical axis, an actuating unit configured to generate movement of at least the first optics group from a retracted position to an extended position along the optical axis, the actuating unit comprising an actuator configured to rotate around the optical axis in a first direction, a first retaining element configured to translate along the optical axis and to rotate around the optical axis in response to the rotation of the actuator,
a second retaining element configured to rotate, in response to the rotation of the first retaining element, from an engaged position, wherein the second retaining element engages and maintains the first optics group in the retracted position, to a disengaged position, wherein the first optics group is released, allowing movement of the first optics group from the retracted position to the extended position, and a resilient element being in a first compression state when the first retaining element in a first linear position along the optical axis and in a second compression state when the first retaining element is in a second linear position along the optical axis. A base is configured to accommodate the first optics group, the second optics group, and the actuating unit, the base comprising a boss configured to
engage and maintain the first retaining element in a first rotary position, such that the rotation of the actuator is converted to translatory movement of the first retaining element from the first linear position to the second linear position, and to disengage the first retaining element when the first retaining element reaches the second linear position, such that the rotation of the actuator generates rotary movement of the first retaining element from the first rotary position to a second rotary position, in which second rotary position the first retaining element is movable from the second linear position to the first linear position by means of decompression of the resilient element, movement of the first retaining element from the second linear position to the first linear position generating the movement of the first optics group from the retracted position to the extended position.

Such a solution allows the use of an actuating unit that is fast, impact resistant, and wherein any unwanted clearances between components are removed. Furthermore, since the resilient element of the actuating unit is decompressed, or at least only partially compressed, also when the first optics group is in the retracted position, the properties of the resilient element remain unaffected, ensuring the resilient element does not weaken over time.

In a possible implementation form of the first aspect, the actuating unit is configured to generate movement of at least the first optics group from the extended position to the retracted position, the actuator being configured to rotate around the optical axis in a second direction, the first retaining element being configured to translate along the optical axis and to rotate around the optical axis in response to the rotation of the actuator, the second retaining element being configured to rotate from the disengaged position to the engaged position, the boss of the base being configured to engage and maintain the first retaining element in the second rotary position, such that the rotation of the actuator is converted to translatory movement of the first retaining element from the first linear position to the second linear position, movement of the first retaining element from the first linear position to the second linear position generating the movement of the first optics group from the extended position to the retracted position, and to disengage the first retaining element when the first retaining element reaches the second linear position, such that the rotation of the actuator generates rotary movement of the first retaining element from the second rotary position to the first rotary position, in which first rotary position the first retaining element is movable from the second linear position to the first linear position by means of decompression of the resilient element. This allows the very same components to be used, with the same advantages, for moving the first optics group from the extended position to the retracted position as well as from the retracted position to the extended position.

In a further possible implementation form of the first aspect, the first optics group comprises at least one lens and a first housing and the second optics group comprises at least one lens and a second housing, facilitating a range of different optical performances.

In a further possible implementation form of the first aspect, the first retaining element comprises a first groove, the second retaining element comprises a second groove, and
the first housing comprises at least one tongue configured to engage one of the first groove and the second groove, the first groove and the second groove being configured to align when the first retaining element is in the second linear position and the second retaining element is in the engaged position, allowing the tongue to slide from the second groove to the first groove such that the first optics group can be released from the second retaining element and movement of the first optics group from the retracted position to the extended position is allowed, the first groove and the second groove being configured to misalign when the first retaining element is in the first linear position and the second retaining element is in the engaged position, allowing the tongue to engage the second groove such that the second retaining element maintains the first optics group in the retracted position. This allows the first optics group to be locked safely into place when in the retracted position, while still allowing the first optics group to move to an extended position with reliability and precision.

In a further possible implementation form of the first aspect, one of the base and the first housing comprises a slot extending parallel with the optical axis and the other of the base and the first housing comprises a protrusion engaging the slot, the slot comprising oppositely arranged closed ends limiting a range of movement of the protrusion within the slot and limiting a range of movement of the first optics group relative the base along the optical axis. This facilitates repeatable and reliable movement of the first housing without clearance along the optical axis, while preventing rotation of the first housing around the optical axis.

In a further possible implementation form of the first aspect, the translatory movement of the first retaining element in a first direction along the optical axis, from the first linear position to the second linear position, generates compression of the resilient element, and
the translatory movement of the first retaining element in a second direction along the optical axis, from the second linear position to the first linear position, facilitates decompression of the resilient element, allowing movement to be generated by means of decompression.

In a further possible implementation form of the first aspect, the degree of compression of the resilient element is larger in the second compression state than in the first compression state, reducing the long-term effect that compression has on the resilient element when in the first compression state.

In a further possible implementation form of the first aspect, the resilient element is configured to transfer the rotation of the first retaining element to the second retaining element, or the first retaining element and the second retaining element are interlocked by means of first and second mechanically engaging parts, the first and second mechanically engaging parts being configured to transfer the rotation of the first retaining element to the second retaining element, providing different options for interconnecting the first retaining element and the second retaining element.

In a further possible implementation form of the first aspect, the actuator comprises a first actuating element configured to rotate around the optical axis and to, when rotating in the first direction, apply force onto a surface of the first retaining element extending at a first angle to the optical axis, the force pushing the first retaining element from the first linear position to the second linear position. Such a solution is simple and does not rely on separately moveable parts to transfer rotational movement to linear movement.

In a further possible implementation form of the first aspect, the first actuating element is configured to, when rotating in the second direction, allow the first retaining element to move from the second linear position to the first linear position. This allows the resilient element to be decompressed regardless of the position of the first optics group.

In a further possible implementation form of the first aspect, the first retaining element comprises a first cam surface extending at a first angle to the optical axis and a second cam surface extending at a second angle to the optical axis, the first actuating element comprising a first cam surface extending at a first angle to the optical axis and a second cam surface extending at a second angle to the optical axis, the first cam surfaces being in abutment with each other along a first contact axis and the second cam surfaces being in abutment with each other along a second contact axis when the first retaining element is in the first linear position, and the first cam surfaces being offset relative each other along the first contact axis and the second cam surfaces being offset relative each other along the second contact axis when the first retaining element is in the second linear position. This solution is simple and does not rely on separately moveable parts to transfer rotational movement to linear movement along the optical axis as well as rotary movement around the optical axis.

In a further possible implementation form of the first aspect, the first cam surface and the second cam surface of the first retaining element together form a v-shaped recess, the first cam surface and the second cam surface of the first actuating element forming a v-shaped protrusion, the v-shaped recess and the v-shaped protrusion being arranged such that the v-shaped recess completely encloses the v-shaped protrusion when the first retaining element is in the first linear position. Such a symmetrical configuration provides a simple and reliable solution for generating translatory and/or rotary movement of the first retaining element.

In a further possible implementation form of the first aspect, the actuator comprises a second actuating element, the first actuating element being configured to rotate around the optical axis in response to the rotation of the second actuating element. This allows the first actuating element to be rotated both clockwise and anticlockwise.

In a further possible implementation form of the first aspect, the second actuating element is configured to be rotated by means of external force, the second actuating element and the first actuating element being configured to interlock by means of third and fourth mechanically engaging parts, the third and fourth mechanically engaging parts being configured to allow the second actuating element to rotate at a different angle around the optical axis than the first actuating element. This allows adjustments to be made by a user, manually or via an actuator.

In a further possible implementation form of the first aspect, when the first optics group has reached the extended position, the actuator is configured such that the rotation of the first actuating element in the first direction is stopped and the second actuating element is rotated in the second direction, and the first actuating element is configured to engage the base such that the rotation of the second actuating element in the second direction is converted to translatory movement of the first actuating element, and the second optics group, in the first direction along the optical axis. This allows auto-focus functionality to be provided without needing a further, separate actuator.

In a further possible implementation form of the first aspect, the first housing of the first optics group is configured to, when the first optics group has reached the extended position, engage the second housing of the second optics group such that the first optics group and the second optics group are translated simultaneously along the optical axis, allowing the distance between the first optics group and the second optics group to be maintained also when autofocus is applied.

In a further possible implementation form of the first aspect, the second actuating element comprises an inner thread configured to engage an outer thread of the first actuating element, facilitating simple, effective, and reliable interconnection and movement of the first actuating element along the optical axis.

In a further possible implementation form of the first aspect, one of the base and the first actuating element comprises a slot extending parallel with the optical axis and the other of the base and the first actuating element comprises a protrusion engaging the slot and limiting a range of movement of the second optics group relative the base along the optical axis, allowing the second optics group to be moved, facilitating autofocus, and also preventing rotation around the optical axis.

According to a second aspect, there is provided an electronic apparatus comprising the optical arrangement according to the above. This allows an electronic device provided with an actuating unit that is fast, impact resistant, without unwanted clearances between components, and maintains its efficiency over time.

These and other aspects will be apparent from the embodiment(s) described below.

### BRIEF DESCRIPTION OF THE DRAWINGS

In the following detailed portion of the present disclosure, the aspects, embodiments, and implementations will be explained in more detail with reference to the example embodiments shown in the drawings, in which:
Fig. 1 shows a perspective view of parts of an optical arrangement in accordance with an example of the embodiments of the disclosure, wherein the first optics group of the optical arrangement is in a retracted position;
Fig. 2 shows a perspective view of parts of an optical arrangement in accordance with an example of the embodiments of the disclosure, wherein the first optics group of the optical arrangement is in an extended position;
Fig. 3 shows a further perspective view of parts of an optical arrangement in accordance with an example of the embodiments of the disclosure, wherein the first optics group of the optical arrangement is in a retracted position;
Fig. 4 shows a side view of parts of an optical arrangement in accordance with an example of the embodiments of the disclosure, wherein the first optics group of the optical arrangement is in an extended position;
Fig. 5 shows a further side view of parts of an optical arrangement in accordance with an example of the embodiments of the disclosure, wherein the first optics group of the optical arrangement is in an extended position;
Figs. 6a to 6c show perspective views of a first retaining element and a second retaining element in accordance with an example of the embodiments of the disclosure;
Fig. 7 shows a partially exploded, perspective view of an actuating unit in accordance with an example of the embodiments of the disclosure;
Fig. 8 shows a perspective view of an actuator and a second optics group in accordance with an example of the embodiments of the disclosure;
Figs. 9a to 9c show perspective views parts of an actuator in accordance with an example of the embodiments of the disclosure;
Figs. 10a to 10c show side views of an optical arrangement in accordance with an example of the embodiments of the disclosure, wherein the first optics group is in a retracted position and the resilient element is in a substantially decompressed state, wherein the first optics group is in a retracted position and the resilient element is in a compressed state, and wherein the first optics group is in an extended position and the resilient element is in a substantially decompressed state.

### DETAILED DESCRIPTION

The present invention relates to an electronic apparatus such as a smartphone, tablet, camera, projector, and similar comprising an optical arrangement 1 as described below.

The present invention also relates to an optical arrangement 1 comprising a first optics group 3 and a second optics group 4 together defining an optical axis A1, an actuating unit 5 configured to generate movement of at least the first optics group 3 from a retracted position P1 to an extended position P2 along the optical axis A1, the actuating unit 5 comprising an actuator 6 configured to rotate around the optical axis A1 in a first direction D1, a first retaining element 7 configured to translate along the optical axis A1 and to rotate around the optical axis A1 in response to the rotation of the actuator 6, a second retaining element 8 configured to rotate, in response to the rotation of the first retaining element 7, from an engaged position P3, wherein the second retaining element 8 engages and maintains the first optics group 3 in the retracted position P1, to a disengaged position P4, wherein the first optics group 3 is released, allowing movement of the first optics group 3 from the retracted position P1 to the extended position P2, a resilient element 9 being in a first compression state S1 when the first retaining element 7 in a first linear position L1 along the optical axis A1 and in a second compression state S2 when the first retaining element 7 is in a second linear position L2 along the optical axis A1,a base 10 configured to accommodate the first optics group 3, the second optics group 4, and the actuating unit 5, the base comprising a boss 11 configured to engage and maintain the first retaining element 7 in a first rotary position R1, such that the rotation of the actuator 6 is converted to translatory movement of the first retaining element 7 from the first linear position L1 to the second linear position L2, and to disengage the first retaining element 7 when the first retaining element 7 reaches the second linear position L2, such that the rotation of the actuator 6 generates rotary movement of the first retaining element 7 from the first rotary position R1 to a second rotary position R2, in which second rotary position R2 the first retaining element 7 is movable from the second linear position L2 to the first linear position L1 by means of decompression of the resilient element 9, movement of the first retaining element 7 from the second linear position L2 to the first linear position L1 generating the movement of the first optics group 3 from the retracted position P1 to the extended position P2.

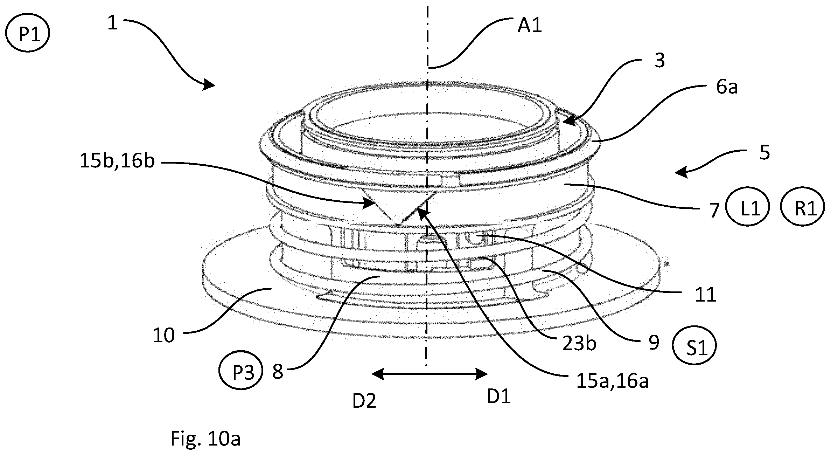

Figs. 10a to 10c illustrate the optical arrangement 1 as well as the relative movement of some of its components as the first optics group 3 is moved from the retracted position P1 to the extended position P2 along the optical axis A1.

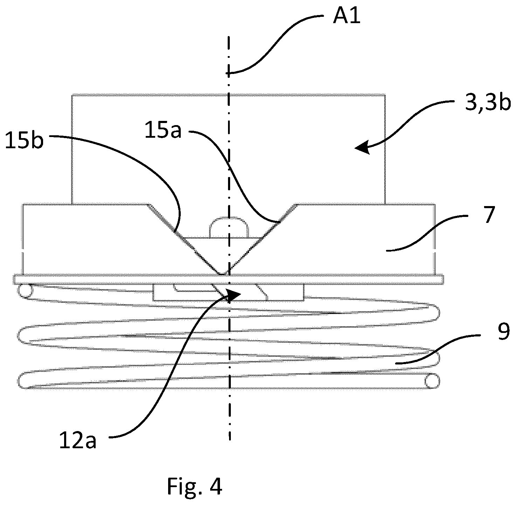

As shown in Fig. 4, a first optics group 3 and a second optics group 4 together define the optical axis A1. The first optics group 3 may comprise at least one lens 3a and a first housing 3b, and the second optics group 4 may comprise at least one lens 4a and a second housing 4b.

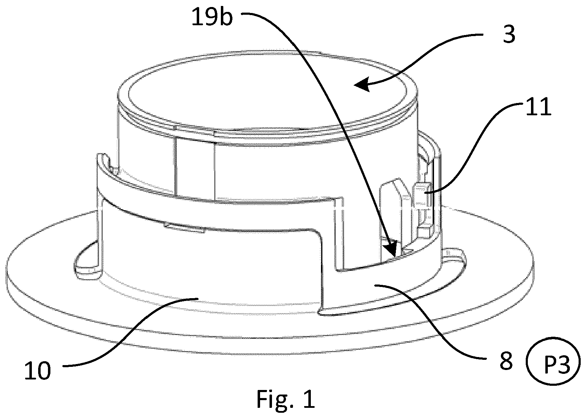

A base 10 is configured to accommodate the first optics group 3, the second optics group 4, and an actuating unit 5, as illustrated in Figs. 1 to 3 and 7.

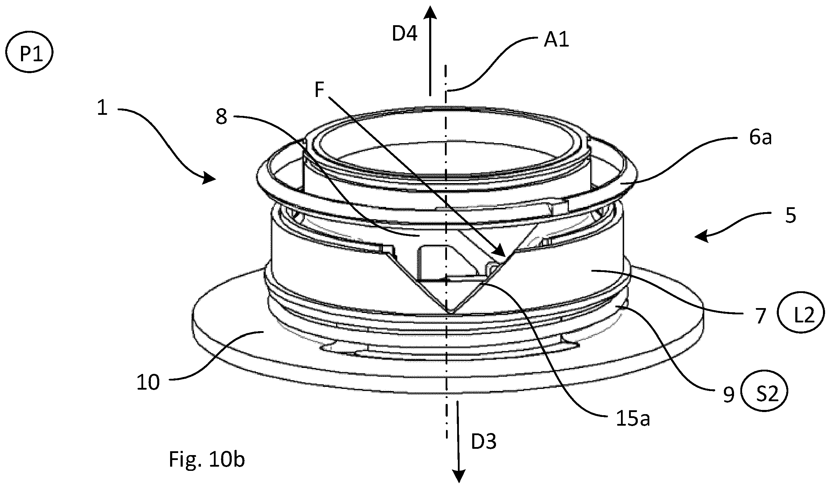

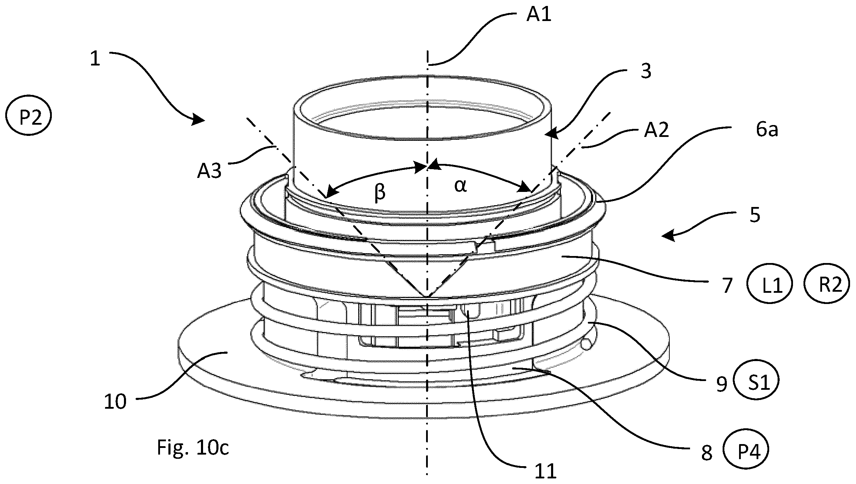

The actuating unit 5, illustrated in Figs. 10 to 10c, is configured to generate the movement of at least the first optics group 3 from the retracted position P1 to the extended position P2 along the optical axis A1. The actuating unit 5 comprises an actuator 6, a first retaining element 7, a second retaining element 8, and a resilient element 9.

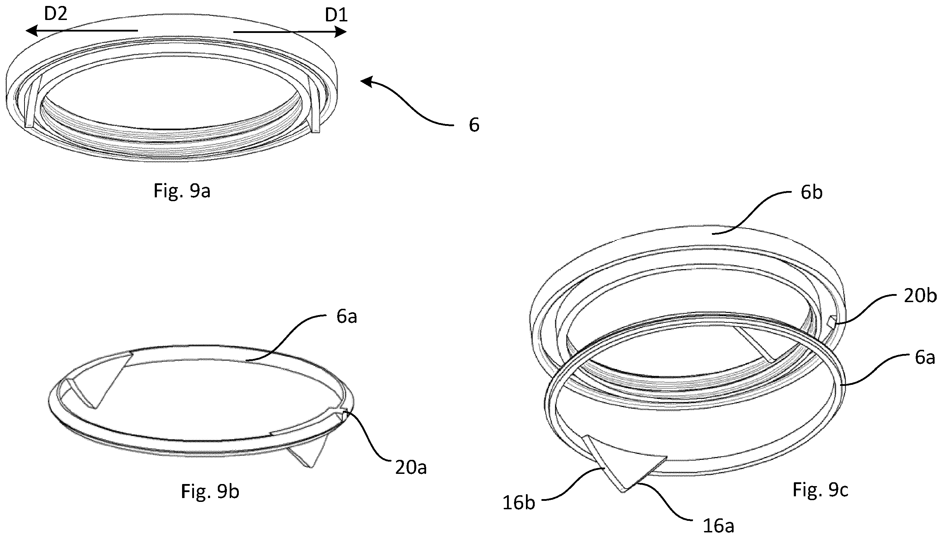

The actuator 6 is configured to rotate around the optical axis A1 in a first direction D1, as illustrated in Figs. 9a, 10a, and 10b, as well as in a second direction D2.

The first retaining element 7 is configured to translate along the optical axis A1 and to rotate around the optical axis A1, simultaneously or independently of the translatory movement, in response to the rotation of the actuator 6 in the first direction D1, as illustrated in Figs. 10a to 10c.

The second retaining element 8 is configured to rotate, in response to the rotation of the first retaining element 7 from an engaged position P3, shown in Fig. 10a, to a disengaged position P4, shown in Fig. 10c. While in the engaged position P3, the second retaining element 8 engages and maintains the first optics group 3 in the retracted position P1. When in the disengaged position P4, the first optics group 3 is released which allows movement of the first optics group 3 from the retracted position P1 to the extended position P2.

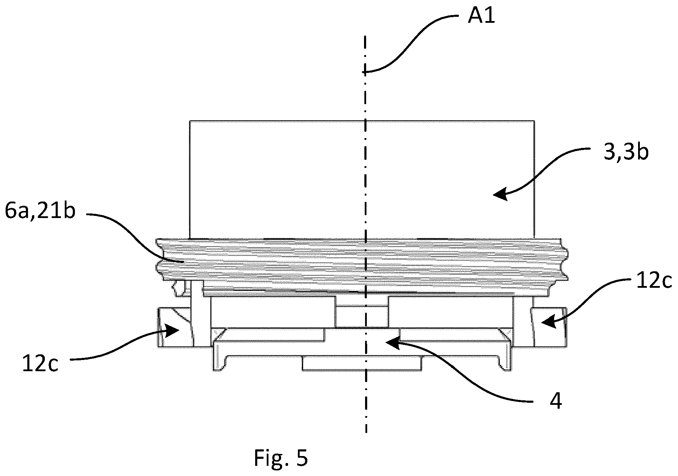

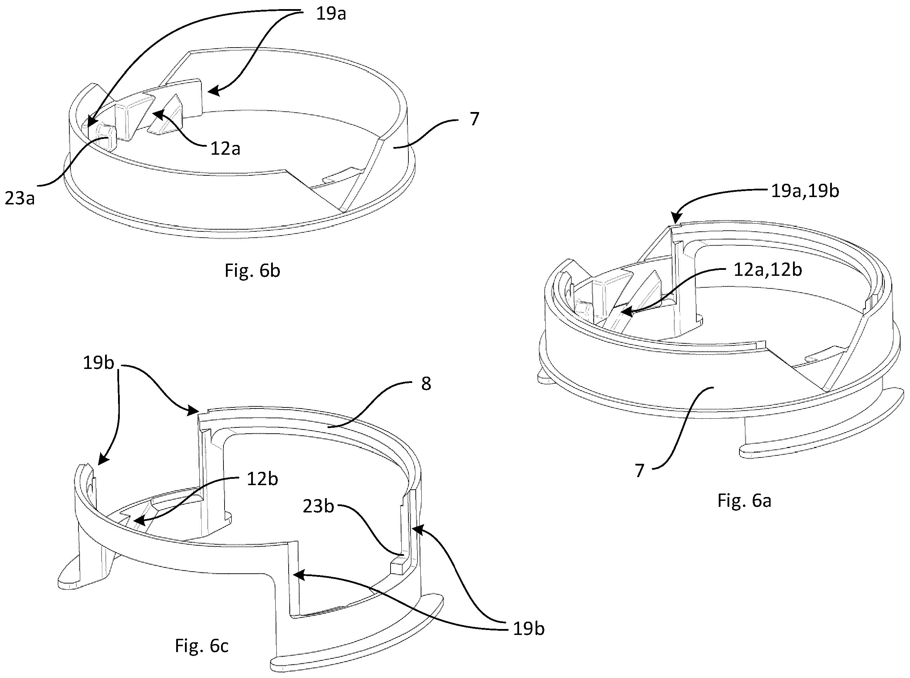

The first retaining element 7 may comprise a first groove 12a and the second retaining element 8 may comprise a second groove 12b, as illustrated in Figs. 6a to 6c. The first housing 3b may comprise at least one tongue 12c, shown in Fig. 5, configured to engage one of the first groove 12a and the second groove 12b. The first groove 12a and the second groove 12b are configured to align when the first retaining element 7 is in the second linear position L2 and the second retaining element 8 is in the engaged position P3, as shown in Fig. 6a, allowing the tongue 12c to slide from the second groove 12b to the first groove 12a such that the first optics group 3 can be released from the second retaining element 8 allowing movement of the first optics group 3 from the retracted position P1 to the extended position P2. The first groove 12a and the second groove 12b are also configured to misalign when the first retaining element 7 is in the first linear position L1 and the second retaining element 8 is in the engaged position P3, allowing the tongue 12c to engage the second groove 12b such that the second retaining element 8 maintains the first optics group 3 in the retracted position P1.

The translatory movement of the first retaining element 7 in the first direction D3 along the optical axis A1, from the first linear position L1 to the second linear position L2, may generate compression of the resilient element 9, and the corresponding translatory movement of the first retaining element 7 in the second direction D4 along the optical axis A1, from the second linear position L2 to the first linear position L1, may facilitate decompression of the resilient element 9.

The resilient element 9 is in a first compression state S1 when the first retaining element 7 in a first linear position L1 along the optical axis A1 and in a second compression state S2 when the first retaining element 7 is in a second linear position L2 along the optical axis A1. In other words, the resilient element 9, e.g. a spring, is compressed to different degrees depending on which linear position along the optical axis A1 the first retaining element 7 is in at the moment. The degree of compression of the resilient element 9 may be larger in the second compression state S2 than in the first compression state S1. The resilient element 9 may be completely decompressed when in the first compression state S1, however, it may also be somewhat compressed. The resilient element 9 may be a coil spring and it may be fixed to the underside of the first retaining element 7.

The resilient element 9 may be configured to transfer the rotation of the first retaining element 7 to the second retaining element 8.

Alternatively, the first retaining element 7 and the second retaining element 8 may be interlocked by means of first and second mechanically engaging parts 19a, 19b, as illustrated in Figs. 6a to 6c. The first and second mechanically engaging parts 19a, 19b are configured to transfer the rotation of the first retaining element 7 to the second retaining element 8. The first and second mechanically engaging parts 19a, 19b may comprise of a number of surface deviations or edges which abut when the first retaining element 7 is in the second linear position L2 such that the first retaining element 7 and the second retaining element 8 partially overlap, i.e. the second retaining element 8 is partially nested within the first retaining element 7.

The base 10 comprises a boss 11, see Figs. 1 to 3, configured to lock and release the first retaining element 7. The boss 11 locks the first retaining element 7 in a first rotary position R1, such that the rotation of the actuator 6 is converted to translatory movement of the first retaining element 7 from the first linear position L1 to the second linear position L2, as illustrated in Figs. 10a and 10b. As illustrated in Fig. 6b, the inner surface of the first retaining element 7 may comprise an additional boss 23a configured to be arranged between boss 11 and an edge 23b of a cut-out in the second retaining element 8, this arrangement effectively preventing the first retaining element 7 from rotating.

The boss 11 releases the first retaining element 7 when the first retaining element 7 reaches the second linear position L2, allowing the rotation of the actuator 6 to generate rotary movement of the first retaining element 7 from the first rotary position R1 to a second rotary position R2, as illustrated in Fig. 10c. The first retaining element 7 may be released since, in the second linear position L2, the additional boss 23a has been moved such that it extends completely underneath boss 11.

When in the second rotary position R2, the first retaining element 7 is movable from the second linear position L2 back to the first linear position L1 by means of decompression of the resilient element 9. The movement of the first retaining element 7 from the second linear position L2 to the first linear position L1 generates movement of the first optics group 3 from the retracted position P1 to the extended position P2, as illustrated in Figs. 10a to 10c.

The actuating unit 5 may furthermore be configured to generate movement of at least the first optics group 3 from the extended position P2 to the retracted position P1, a movement which is shown in Figs. 10c to 10a. In such an embodiment, the actuator 6 is configured to rotate around the optical axis A1 in a second direction D2 and the second retaining element 8 is configured to rotate from the disengaged position P4 to the engaged position P3. The boss 11 of the base 10 is configured to lock the first retaining element 7 in the second rotary position R2, such that the rotation of the actuator 6 is converted to translatory movement of the first retaining element 7 from the first linear position L1 to the second linear position L2. The movement of the first retaining element 7 from the first linear position L1 to the second linear position L2 generates movement of the first optics group 3 from the extended position P2 to the retracted position P1. The boss 11 is also configured to release the first retaining element 7 when the first retaining element 7 reaches the second linear position L2, such that the rotation of the actuator 6 generates rotary movement of the first retaining element 7 from the second rotary position R2 to the first rotary position R1. When in the first rotary position R1, the first retaining element 7 is movable from the second linear position L2 to the first linear position L1 by means of decompression of the resilient element 9.

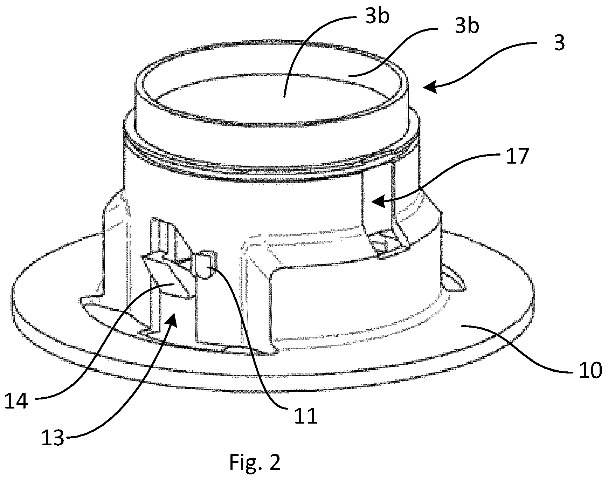

One of the base 10 and the first housing 3b may comprise a slot 13 extending parallel with the optical axis A1 and the other of the base 10 and the first housing 3b comprises a protrusion 14 engaging the slot 13, as illustrated in Fig. 2. The slot 13 comprises oppositely arranged closed ends limiting the range of movement of the protrusion 14 within the slot 13 and, hence, limiting the range of movement of the first optics group 3 relative the base 10 along the optical axis A1.

The actuator 6 may comprise a first actuating element 6a configured to rotate around the optical axis A1 and to, when rotating in the first direction D1, apply force F onto a surface 15a of the first retaining element 7 extending at a first angle α to the optical axis A1, as illustrated in Figs. 10b and 10c. The force F pushes the first retaining element 7 from the first linear position L1 to the second linear position L2.

The first actuating element 6a may also be configured to, when rotating in the second direction D2, allow the first retaining element 7 to move from the second linear position L2 to the first linear position L1.

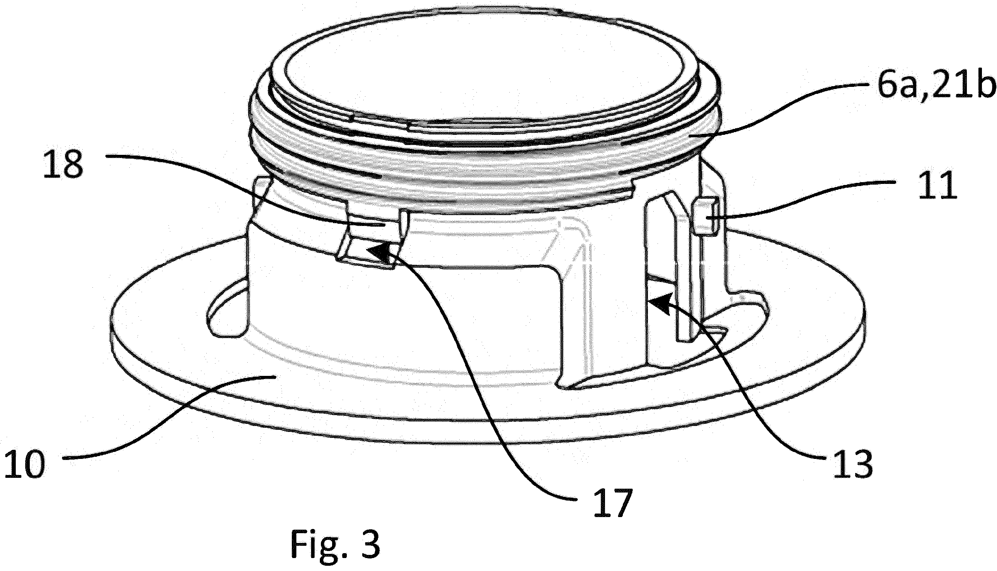

One of the base 10 and the first actuating element 6a may comprise a slot 17 extending parallel with the optical axis A1 and the other of the base 10 and the first actuating element 6a comprises a protrusion 18 engaging the slot 17 and limiting a range of movement of the second optics group 4 relative the base 10 along the optical axis A1, as shown in Fig. 3.

The first retaining element 7 may comprise a first cam surface 15a extending at a first angle α to the optical axis A1 and a second cam surface 15b extending at a second angle β to the optical axis A1. Correspondingly, the first actuating element 6a may comprise a first cam surface 16a extending at a first angle α to the optical axis A1 and a second cam surface 16b extending at a second angle β to the optical axis A1, as illustrated in Fig. 10c. The first cam surfaces 15a, 16a are in abutment with each other along a first contact axis A2 and the second cam surfaces 15b, 16b are in abutment with each other along a second contact axis A3 when the first retaining element 7 is in the first linear position L1, see Figs. 10a and 10c. The first cam surfaces 15a, 16a are offset relative each other along the first contact axis A2 and the second cam surfaces 15b, 16b are offset relative to each other along the second contact axis A3 when the first retaining element 7 is in the second linear position L2, see Fig. 10b.

The first cam surface 15a and the second cam surface 15b of the first retaining element 7 may together form a v-shaped recess, as shown in Fig. 4, and correspondingly the first cam surface 16a and the second cam surface 16b of the first actuating element 6a may form a v-shaped protrusion, see Fig. 9c. The v-shaped recess and the v-shaped protrusion are arranged such that the v-shaped recess completely encloses the v-shaped protrusion when the first retaining element 7 is in the first linear position L1, as shown in Figs. 10a and 10c. Nevertheless, the cam surfaces 15a, 15b, 16a, and 16b may have any suitable shapes.

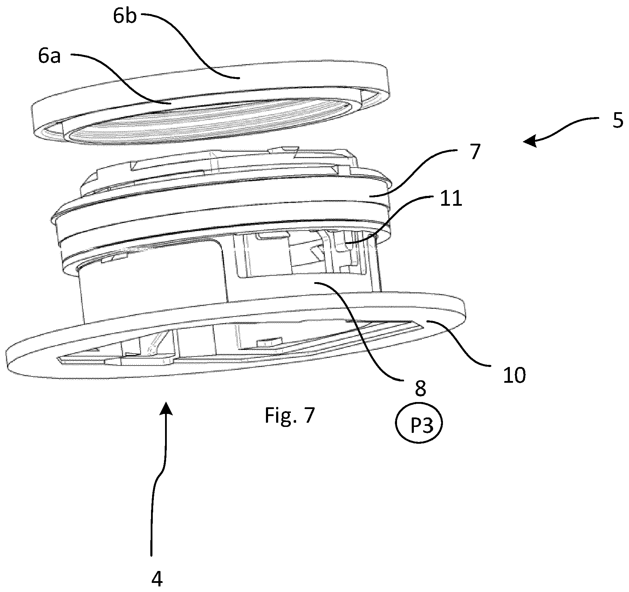

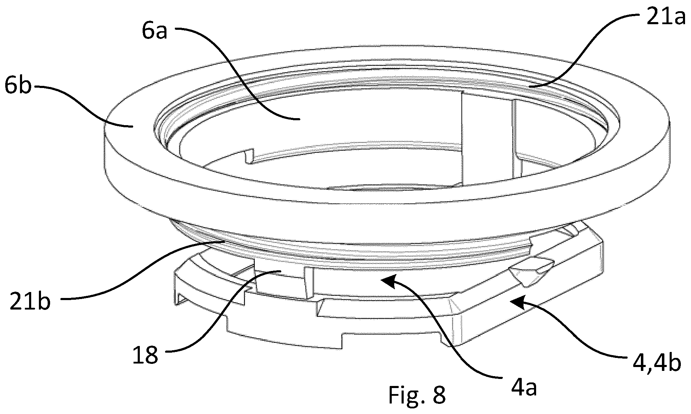

The actuator 6 may also comprise a second actuating element 6b, shown in Figs. 7 to 9c, the first actuating element 6a being configured to rotate around the optical axis A1 in response to the rotation of the second actuating element 6b. The second actuating element 6b is configured to be rotated by means of external force, the second actuating element 6b and the first actuating element 6a being configured to interlock by means of third and fourth mechanically engaging parts 20a, 20b, as shown in Figs 9b and 9c. The third and fourth mechanically engaging parts 20a, 20b are configured to allow the second actuating element 6b to rotate at a different angle around the optical axis A1 than the first actuating element 6a.

When the first optics group 3 has reached the extended position P2, as shown in Fig. 10c, the actuator 6 may be configured such that rotation of the first actuating element 6a in the first direction D1 is stopped and the second actuating element 6b is rotated in the second direction D2. The first actuating element 6a is configured to engage the base 10 such that the rotation of the second actuating element 6b in the second direction D2 is converted to translatory movement of the first actuating element 6a, and the second optics group 4, in the first direction D3 along the optical axis A1.

The first housing 3b of the first optics group 3 may be configured to, when the first optics group 3 has reached the extended position P2, engage the second housing 4b of the second optics group 4 such that the first optics group 3 and the second optics group 4 are translated simultaneously along the optical axis A1.

The second actuating element 6b may comprise an inner thread 21a configured to engage an outer thread 22a of the first actuating element 6a, see Figs. 3, 8, and 9c.

The various aspects and implementations have been described in conjunction with various embodiments herein. However, other variations to the disclosed embodiments can be understood and effected by those skilled in the art in practicing the claimed subject-matter, from a study of the drawings, the disclosure, and the appended claims. In the claims, the word "comprising" does not exclude other elements or steps, and the indefinite article "a" or "an" does not exclude a plurality. The mere fact that certain measures are recited in mutually different dependent claims does not indicate that a combination of these measured cannot be used to advantage.

The reference signs used in the claims shall not be construed as limiting the scope. Unless otherwise indicated, the drawings are intended to be read (e.g., cross-hatching, arrangement of parts, proportion, degree, etc.) together with the specification, and are to be considered a portion of the entire written description of this disclosure. As used in the description, the terms "horizontal", "vertical", "left", "right", "up" and "down", as well as adjectival and adverbial derivatives thereof (e.g., "horizontally", "rightwardly", "upwardly", etc.), simply refer to the orientation of the illustrated structure as the particular drawing figure faces the reader. Similarly, the terms "inwardly" and "outwardly" generally refer to the orientation of a surface relative to its axis of elongation, or axis of rotation, as appropriate.

## Claims

1. An optical arrangement (1) for an electronic apparatus (2), said optical arrangement (1) comprising:
- a first optics group (3) and a second optics group (4) together defining an optical axis (A1);
- an actuating unit (5) configured to generate movement of at least said first optics group (3) from a retracted position (P1) to an extended position (P2) along said optical axis (A1),
said actuating unit (5) comprising:
--an actuator (6) configured to rotate around said optical axis (A1) in a first direction (D1),
--a first retaining element (7) configured to translate along said optical axis (A1) and to rotate around said optical axis (A1) in response to said rotation of said actuator (6),
--a second retaining element (8) configured to rotate, in response to said rotation of said first retaining element (7), from an engaged position (P3), wherein said second retaining element (8) engages and maintains said first optics group (3) in said retracted position (P1), to a disengaged position (P4), wherein said first optics group (3) is released, allowing movement of said first optics group (3) from said retracted position (P1) to said extended position (P2),
--a resilient element (9) being in a first compression state (S1) when said first retaining element (7) in a first linear position (L1) along said optical axis (A1) and in a second compression state (S2) when said first retaining element (7) is in a second linear position (L2) along said optical axis (A1),
- a base (10) configured to accommodate said first optics group (3), said second optics group (4), and said actuating unit (5), said base comprising a boss (11) configured to
--engage and maintain said first retaining element (7) in a first rotary position (R1), such that said rotation of said actuator (6) is converted to translatory movement of said first retaining element (7) from said first linear position (L1) to said second linear position (L2), and
--to disengage said first retaining element (7) when said first retaining element (7) reaches said second linear position (L2), such that said rotation of said actuator (6) generates rotary movement of said first retaining element (7) from said first rotary position (R1) to a second rotary position (R2), in which second rotary position (R2) said first retaining element (7) is movable from said second linear position (L2) to said first linear position (L1) by means of decompression of said resilient element (9),
movement of said first retaining element (7) from said second linear position (L2) to said first linear position (L1) generating said movement of said first optics group (3) from said retracted position (P1) to said extended position (P2).

2. The optical arrangement (1) according to claim 1, wherein said actuating unit (5) is configured to generate movement of at least said first optics group (3) from said extended position (P2) to said retracted position (P1),
- -said actuator (6) being configured to rotate around said optical axis (A1) in a second direction (D2),
- -said first retaining element (7) being configured to translate along said optical axis (A1) and to rotate around said optical axis (A1) in response to said rotation of said actuator (6),
- -said second retaining element (8) being configured to rotate from said disengaged position (P4) to said engaged position (P3),
said boss (11) of said base (10) being configured to
--engage and maintain said first retaining element (7) in said second rotary position (R2), such that said rotation of said actuator (6) is converted to translatory movement of said first retaining element (7) from said first linear position (L1) to said second linear position (L2), movement of said first retaining element (7) from said first linear position (L1) to said second linear position (L2) generating said movement of said first optics group (3) from said extended position (P2) to said retracted position (P1),
and
--to disengage said first retaining element (7) when said first retaining element (7) reaches said second linear position (L2),
such that said rotation of said actuator (6) generates rotary movement of said first retaining element (7) from said second rotary position (R2) to said first rotary position (R1), in which first rotary position (R1) said first retaining element (7) is movable from said second linear position (L2) to said first linear position (L1) by means of decompression of said resilient element (9).

3. The optical arrangement (1) according to claim 1 or 2, wherein said first optics group (3) comprises at least one lens (3a) and a first housing (3b) and said second optics group (4) comprises at least one lens (4a) and a second housing (4b).

4. The optical arrangement (1) according to claim 3, wherein said first retaining element (7) comprises a first groove (12a), said second retaining element (8) comprises a second groove (12b), and said first housing (3b) comprises at least one tongue (12c) configured to engage one of said first groove (12a) and said second groove (12b),
said first groove (12a) and said second groove (12b) being configured to align when said first retaining element (7) is in said second linear position (L2) and said second retaining element (8) is in said engaged position (P3), allowing said tongue (12c) to slide from said second groove (12b) to said first groove (12a) such that said first optics group (3) can be released from said second retaining element (8) and movement of said first optics group (3) from said retracted position (P1) to said extended position (P2) is allowed, and
said first groove (12a) and said second groove (12b) being configured to misalign when said first retaining element (7) is in said first linear position (L1) and said second retaining element (8) is in said engaged position (P3), allowing said tongue (12c) to engage said second groove (12b) such that said second retaining element (8) maintains said first optics group (3) in said retracted position (P1).

5. The optical arrangement (1) according to claim 3 or 4, wherein one of said base (10) and said first housing (3b) comprises a slot (13) extending parallel with said optical axis (A1) and the other of said base (10) and said first housing (3b) comprises a protrusion (14) engaging said slot (13), said slot (13) comprising oppositely arranged closed ends limiting a range of movement of said protrusion (14) within said slot (13) and limiting a range of movement of said first optics group (3) relative said base (10) along said optical axis (A1).

6. The optical arrangement (1) according to any one of the previous claims, wherein
said translatory movement of said first retaining element (7) in a first direction (D3) along said optical axis (A1), from said first linear position (L1) to said second linear position (L2), generates compression of said resilient element (9), and
wherein said translatory movement of said first retaining element (7) in a second direction (D4) along said optical axis (A1), from said second linear position (L2) to said first linear position (L1), facilitates decompression of said resilient element (9).

7. The optical arrangement (1) according to any one of the previous claims, wherein the degree of compression of said resilient element (9) is larger in said second compression state (S2) than in said first compression state (S1).

8. The optical arrangement (1) according to any one of the previous claims, wherein
said resilient element (9) is configured to transfer said rotation of said first retaining element (7) to said second retaining element (8), or
wherein said first retaining element (7) and said second retaining element (8) are interlocked by means of first and second mechanically engaging parts (19a, 19b), said first and second mechanically engaging parts (19a, 19b) being configured to transfer said rotation of said first retaining element (7) to said second retaining element (8).

9. The optical arrangement (1) according to any one of the previous claims, wherein said actuator (6) comprises a first actuating element (6a) configured to rotate around said optical axis (A1) and to, when rotating in said first direction (D1), apply force (F) onto a surface (15a) of said first retaining element (7) extending at a first angle (α) to said optical axis (A1), said force (F) pushing said first retaining element (7) from said first linear position (L1) to said second linear position (L2).

10. The optical arrangement (1) according to claim 9, wherein said first actuating element (6a) is configured to, when rotating in said second direction (D2), allow said first retaining element (7) to move from said second linear position (L2) to said first linear position (L1).

11. The optical arrangement (1) according to claim 9 or 10, wherein said first retaining element (7) comprises a first cam surface (15a) extending at a first angle (α) to said optical axis (A1) and a second cam surface (15b) extending at a second angle (β) to said optical axis (A1), wherein said first actuating element (6a) comprises a first cam surface (16a) extending at a first angle (α) to said optical axis (A1) and a second cam surface (16b) extending at a second angle (β) to said optical axis (A1), and
wherein said first cam surfaces (15a, 16a) are in abutment with each other along a first contact axis (A2) and said second cam surfaces (15b, 16b) are in abutment with each other along a second contact axis (A3) when said first retaining element (7) is in said first linear position (L1), and
wherein said first cam surfaces (15a, 16a) are offset relative each other along said first contact axis (A2) and said second cam surfaces (15b, 16b) are offset relative each other along said second contact axis (A3) when said first retaining element (7) is in said second linear position (L2).

12. The optical arrangement (1) according to claim 11, wherein said first cam surface (15a) and said second cam surface (15b) of said first retaining element (7) together form a v-shaped recess, and wherein said first cam surface (16a) and said second cam surface (16b) of said first actuating element (6a) form a v-shaped protrusion, said v-shaped recess and said v-shaped protrusion being arranged such that said v-shaped recess completely encloses said v-shaped protrusion when said first retaining element (7) is in said first linear position (L1).

13. The optical arrangement (1) according to any one of claims 9 to 12, wherein said actuator (6) comprises a second actuating element (6b), said first actuating element (6a) being configured to rotate around said optical axis (A1) in response to rotation of said second actuating element (6b).

14. The optical arrangement (1) according to claim 13, wherein said second actuating element (6b) is configured to be rotated by means of external force, said second actuating element (6b) and said first actuating element (6a) being configured to interlock by means of third and fourth mechanically engaging parts (20a, 20b), said third and fourth mechanically engaging parts (20a, 20b) being configured to allow said second actuating element (6b) to rotate at a different angle around said optical axis (A1) than said first actuating element (6a).

15. An electronic apparatus comprising the optical arrangement according to any one of claims 1 to 14.

## Patentansprüche

1. Optische Anordnung (1) für eine elektronische Vorrichtung (2), wobei die optische Anordnung (1) Folgendes umfasst:
- eine erste Optikgruppe (3) und eine zweite Optikgruppe (4), die zusammen eine optische Achse (A1) definieren;
- eine Betätigungseinheit (5), die dazu konfiguriert ist, eine Bewegung mindestens der ersten Optikgruppe (3) von einer eingefahrenen Position (P1) in eine ausgefahrene Position (P2) entlang der optischen Achse (A1) zu erzeugen,
wobei die Betätigungseinheit (5) Folgendes umfasst:
-- einen Betätiger (6), der dazu konfiguriert ist, sich um die optische Achse (A1) in einer ersten Richtung (D1) zu drehen,
-- ein erstes Halteelement (7), das dazu konfiguriert ist, sich entlang der optischen Achse (A1) zu verschieben und sich als Reaktion auf die Drehung des Betätigers (6) um die optische Achse (A1) zu drehen,
-- ein zweites Halteelement (8), das dazu konfiguriert ist, sich als Reaktion auf die Drehung des ersten Halteelements (7) von einer in Eingriff genommenen Position (P3), wobei das zweite Halteelement (8) die erste Optikgruppe (3) in der eingefahrenen Position (P1) in Eingriff nimmt und hält, in eine gelöste Position (P4), wobei die erste Optikgruppe (3) freigegeben wird, zu drehen, was eine Bewegung der ersten Optikgruppe (3) von der eingefahrenen Position (P1) in die ausgefahrene Position (P2) ermöglicht,
-- ein elastisches Element (9), das sich, wenn sich das erste Halteelement (7) in einer ersten linearen Position (L1) entlang der optischen Achse (A1) befindet, in einem ersten Kompressionszustand (S1) und, wenn sich das erste Halteelement (7) in einer zweiten linearen Position (L2) entlang der optischen Achse (A1) befindet, in einem zweiten Kompressionszustand (S2) befindet,
- eine Basis (10), die dazu konfiguriert ist, die erste Optikgruppe (3), die zweite Optikgruppe (4) und die Betätigungseinheit (5) aufzunehmen, wobei die Basis einen Vorsprung (11) umfasst, der zu Folgendem konfiguriert ist:
-- derartigem In-Eingriff-Nehmen und Halten des ersten Halteelements (7) in einer ersten Drehposition (R1), dass die Drehung des Betätigers (6) in eine translatorische Bewegung des ersten Halteelements (7) von der ersten linearen Position (L1) in die zweite lineare Position (L2) umgewandelt wird, und
-- derartigem Lösen des ersten Halteelements (7), wenn das erste Halteelement (7) die zweite lineare Position (L2) erreicht, dass die Drehung des Betätigers (6) eine Drehbewegung des ersten Halteelements (7) von der ersten Drehposition (R1) in eine zweite Drehposition (R2) erzeugt, wobei das erste Halteelement (7) in der zweiten Drehposition (R2) mittels einer Dekompression des elastischen Elements (9) von der zweiten linearen Position (L2) in die erste lineare Position (L1) bewegbar ist,
wobei die Bewegung des ersten Halteelements (7) von der zweiten linearen Position (L2) in die erste lineare Position (L1) die Bewegung der ersten Optikgruppe (3) von der eingefahrenen Position (P1) in die ausgefahrene Position (P2) erzeugt.

2. Optische Anordnung (1) nach Anspruch 1, wobei die Betätigungseinheit (5) dazu konfiguriert ist, eine Bewegung mindestens der ersten Optikgruppe (3) von der ausgefahrenen Position (P2) in die eingefahrene Position (P1) zu erzeugen,
-- wobei der Betätiger (6) dazu konfiguriert ist, sich um die optische Achse (A1) in einer zweiten Richtung (D2) zu drehen,
-- wobei das erste Halteelement (7) dazu konfiguriert ist, sich entlang der optischen Achse (A1) zu verschieben und sich als Reaktion auf die Drehung des Betätigers (6) um die optische Achse (A1) zu drehen,
-- wobei das zweite Halteelement (8) dazu konfiguriert ist, sich von der gelösten Position (P4) in die in Eingriff genommene Position (P3) zu drehen,
wobei der Vorsprung (11) der Basis (10) zu Folgendem konfiguriert ist:
-- derartigem In-Eingriff-Nehmen und Halten des ersten Halteelements (7) in der zweiten Drehposition (R2), dass die Drehung des Betätigers (6) in eine translatorische Bewegung des ersten Halteelements (7) von der ersten linearen Position (L1) in die zweite lineare Position (L2) umgewandelt wird, wobei die Bewegung des ersten Halteelements (7) von der ersten linearen Position (L1) in die zweite lineare Position (L2) die Bewegung der ersten Optikgruppe (3) von der ausgefahrenen Position (P2) in die eingefahrene Position (P1) erzeugt,
und
-- derartigem Lösen des ersten Halteelements (7), wenn das erste Halteelement (7) die zweite lineare Position (L2) erreicht, dass die Drehung des Betätigers (6) die Drehbewegung des ersten Halteelements (7) von der zweiten Drehposition (R2) in die erste Drehposition (R1) erzeugt, wobei das erste Halteelement (7) in der ersten Drehposition (R1) mittels Dekompression des elastischen Elements (9) von der zweiten linearen Position (L2) in die erste lineare Position (L1) bewegbar ist.

3. Optische Anordnung (1) nach Anspruch 1 oder 2, wobei die erste Optikgruppe (3) mindestens eine Linse (3a) und ein erstes Gehäuse (3b) umfasst und die zweite Optikgruppe (4) mindestens eine Linse (4a) und ein zweites Gehäuse (4b) umfasst.

4. Optische Anordnung (1) nach Anspruch 3, wobei das erste Halteelement (7) eine erste Nut (12a) umfasst, das zweite Halteelement (8) eine zweite Nut (12b) umfasst und das erste Gehäuse (3b) mindestens eine Zunge (12c) umfasst, die dazu konfiguriert ist, eine der ersten Nut (12a) und der zweiten Nut (12b) in Eingriff zu nehmen,
wobei die erste Nut (12a) und die zweite Nut (12b) dazu konfiguriert sind, sich auszurichten, wenn sich das erste Halteelement (7) in der zweiten linearen Position (L2) befindet und sich das zweite Halteelement (8) in der in Eingriff genommenen Position (P3) befindet, was es der Zunge (12c) ermöglicht, derart von der zweiten Nut (12b) in die erste Nut (12a) zu gleiten, dass die erste Optikgruppe (3) aus dem zweiten Halteelement (8) freigegeben werden kann und die Bewegung der ersten Optikgruppe (3) von der eingefahrenen Position (P1) in die ausgefahrene Position (P2) ermöglicht wird, und
wobei die erste Nut (12a) und die zweite Nut (12b) dazu konfiguriert sind, sich falsch auszurichten, wenn sich das erste Halteelement (7) in der ersten linearen Position (L1) befindet und sich das zweite Halteelement (8) in der in Eingriff genommenen Position (P3) befindet, was es der Zunge (12c) ermöglicht, die zweite Nut (12b) derart in Eingriff zu nehmen, dass das zweite Halteelement (8) die erste Optikgruppe (3) in der eingefahrenen Position (P1) hält.

5. Optische Anordnung (1) nach Anspruch 3 oder 4, wobei eines der Basis (10) und des ersten Gehäuses (3b) einen Schlitz (13) umfasst, der sich parallel zu der optischen Achse (A1) erstreckt, und das andere der Basis (10) und des ersten Gehäuses (3b) einen Vorstand (14) umfasst, der den Schlitz (13) in Eingriff nimmt, wobei der Schlitz (13) gegenüberliegend angeordnete, geschlossene Enden umfasst, die einen Bewegungsbereich des Vorstands (14) innerhalb des Schlitzes (13) begrenzen und einen Bewegungsbereich der ersten Optikgruppe (3) in Bezug auf die Basis (10) entlang der optischen Achse (A1) begrenzen.

6. Optische Anordnung (1) nach einem der vorhergehenden Ansprüche, wobei
die translatorische Bewegung des ersten Halteelements (7) in einer ersten Richtung (D3) entlang der optischen Achse (A1) von der ersten linearen Position (L1) in die zweite lineare Position (L2) eine Kompression des elastischen Elements (9) erzeugt und wobei die translatorische Bewegung des ersten Halteelements (7) in einer zweiten Richtung (D4) entlang der optischen Achse (A1) von der zweiten linearen Position (L1) in die erste lineare Position (L2) eine Dekompression des elastischen Elements (9) möglich macht.

7. Optische Anordnung (1) nach einem der vorhergehenden Ansprüche, wobei der Kompressionsgrad des elastischen Elements (9) in dem zweiten Kompressionszustand (S2) größer als in dem ersten Kompressionszustand (S1) ist.

8. Optische Anordnung (1) nach einem der vorhergehenden Ansprüche, wobei
das elastische Element (9) dazu konfiguriert ist, die Drehung des ersten Halteelements (7) auf das zweite Halteelement (8) zu übertragen, oder
wobei das erste Halteelement (7) und das zweite Halteelement (8) mittels eines ersten und eines zweiten sich mechanisch in Eingriff nehmenden Teiles (19a, 19b) miteinander verriegelt sind, wobei das erste und das zweite sich mechanisch in Eingriff nehmende Teil (19a, 19b) dazu konfiguriert sind, die Drehung des ersten Halteelements (7) auf das zweite Halteelement (8) zu übertragen.

9. Optische Anordnung (1) nach einem der vorhergehenden Ansprüche, wobei der Betätiger (6) ein erstes Betätigungselement (6a) umfasst, das dazu konfiguriert ist, sich um die optische Achse (A1) zu drehen und, wenn es sich in der ersten Richtung (D1) dreht, eine Kraft (F) auf eine Oberfläche (15a) des ersten Halteelements (7) anzuwenden, die sich unter einem ersten Winkel (α) zu der optischen Achse (A1) erstreckt, wobei die Kraft (F) das erste Halteelement (7) von der ersten linearen Position (L1) in die zweite lineare Position (L2) drückt.

10. Optische Anordnung (1) nach Anspruch 9, wobei das erste Betätigungselement (6a) dazu konfiguriert ist, wenn es sich in der zweiten Richtung (D2) dreht, es dem ersten Halteelement (7) zu ermöglichen, sich von der zweiten linearen Position (L2) in die erste lineare Position (L1) zu bewegen.

11. Optische Anordnung (1) nach Anspruch 9 oder 10, wobei das erste Halteelement (7) eine erste Nockenfläche (15a), die sich unter einem ersten Winkel (α) zu der optischen Achse (A1) erstreckt, und eine zweite Nockenfläche (15b), die sich unter einem zweiten Winkel (β) zu der optischen Achse (A1) erstreckt, umfasst, wobei das erste Betätigungselement (6a) eine erste Nockenfläche (16a), die sich unter einem ersten Winkel (α) zu der optischen Achse (A1) erstreckt, und eine zweite Nockenfläche (16b), die sich unter einem zweiten Winkel (β) zu der optischen Achse (A1) erstreckt, umfasst und
wobei die ersten Nockenflächen (15a, 16a) entlang einer ersten Kontaktachse (A2) aneinander anliegen und die zweiten Nockenflächen (15b, 16b) entlang einer zweiten Kontaktachse (A3) aneinander anliegen, wenn sich das erste Halteelement (7) in der ersten linearen Position (L1) befindet, und
wobei die ersten Nockenflächen (15a, 16a) entlang der ersten Kontaktachse (A2) in Bezug aufeinander versetzt sind und die zweiten Nockenflächen (15b, 16b) entlang der zweiten Kontaktachse (A3) in Bezug aufeinander versetzt sind, wenn sich das erste Halteelement (7) in der zweiten linearen Position (L2) befindet.

12. Optische Anordnung (1) nach Anspruch 11, wobei die erste Nockenfläche (15a) und die zweite Nockenfläche (15b) des ersten Halteelements (7) zusammen eine V-förmige Aussparung bilden und wobei die erste Nockenfläche (16a) und die zweite Nockenfläche (16b) des ersten Betätigungselements (6a) einen V-förmigen Vorstand bilden, wobei die V-förmige Aussparung und der V-förmige Vorstand derart angeordnet sind, dass die V-förmige Aussparung den V-förmigen Vorstand vollständig umschließt, wenn sich das erste Halteelement (7) in der ersten linearen Position (L1) befindet.

13. Optische Anordnung (1) nach einem der Ansprüche 9 bis 12, wobei der Betätiger (6) ein zweites Betätigungselement (6b) umfasst, wobei das erste Betätigungselement (6a) dazu konfiguriert ist, sich als Reaktion auf die Drehung des zweiten Betätigungselements (6b) um die optische Achse (A1) zu drehen.

14. Optische Anordnung (1) nach Anspruch 13, wobei das zweite Betätigungselement (6b) dazu konfiguriert ist, mittels einer externen Kraft gedreht zu werden, wobei das zweite Betätigungselement (6b) und das erste Betätigungselement (6a) dazu konfiguriert sind, sich mittels eines dritten und eines vierten sich mechanisch in Eingriff nehmenden Teiles (20a, 20b) miteinander zu verriegeln, wobei das dritte und das vierte sich mechanisch in Eingriff nehmende Teil (20a, 20b) dazu konfiguriert sind, es dem zweiten Betätigungselement (6b) zu ermöglichen, sich unter einem anderen Winkel als das erste Betätigungselement (6a) um die optische Achse (A1) zu drehen.

15. Elektronische Vorrichtung, umfassend die optische Anordnung nach einem der Ansprüche 1 bis 14.

## Revendications

1. Agencement optique (1) pour un appareil électronique (2), ledit arrangement optique (1) comprenant :
- un premier groupe d'optiques (3) et un second groupe d'optiques (4) définissant ensemble un axe optique (A1) ;
- une unité d'actionnement (5) configurée pour générer le mouvement d'au moins ledit premier groupe d'optiques (3) d'une position rétractée (P1) à une position étendue (P2) le long dudit axe optique (A1),
ladite unité d'actionnement (5) comprenant :
-- un actionneur (6) configuré pour tourner autour dudit axe optique (A1) dans une première direction (D1),
-- un premier élément de retenue (7) configuré pour se déplacer le long dudit axe optique (A1) et pour tourner autour dudit axe optique (A1) en réponse à ladite rotation dudit actionneur (6),
-- un second élément de retenue (8) configuré pour tourner, en réponse à ladite rotation dudit premier élément de retenue (7), d'une position de contact (P3), dans lequel ledit second élément de retenue (8) entre en contact avec et maintient ledit premier groupe d'optiques (3) dans ladite position rétractée (P1), à une position désengagée (P4), dans lequel ledit premier groupe d'optiques (3) est libéré, permettant le mouvement dudit premier groupe d'optiques (3) de ladite position rétractée (P1) à ladite position étendue (P2),
-- un élément élastique (9) étant dans un premier état de compression (S1) lorsque ledit premier élément de retenue (7) est dans une première position linéaire (L1) le long dudit axe optique (A1) et dans un second état de compression (S2) lorsque ledit premier élément de retenue (7) est dans une seconde position linéaire (L2) le long dudit axe optique (A1),
- une base (10) configurée pour accueillir ledit premier groupe d'optiques (3), ledit second groupe d'optiques (4), et ladite unité d'actionnement (5), ladite base comprenant un bossage (11) configuré pour
-- entrer en contact avec et maintenir ledit premier élément de retenue (7) dans une première position rotative (R1), de sorte que ladite rotation dudit actionneur (6) est convertie en un mouvement de déplacement dudit premier élément de retenue (7) de ladite première position linéaire (L1) à ladite seconde position linéaire (L2), et
-- pour désengager ledit premier élément de retenue (7) lorsque ledit premier élément de retenue (7) atteint ladite seconde position linéaire (L2), de sorte que ladite rotation dudit actionneur (6) génère un mouvement rotatif dudit premier élément de retenue (7) de ladite première position rotative (R1) à une seconde position rotative (R2), dans laquelle seconde position rotative (R2) ledit premier élément de retenue (7) est mobile de ladite seconde position linéaire (L2) à ladite première position linéaire (L1) au moyen de la décompression dudit élément élastique (9),
le mouvement dudit premier élément de retenue (7) de ladite seconde position linéaire (L2) à ladite première position linéaire (L1) générant ledit mouvement dudit premier groupe d'optiques (3) de ladite position rétractée (P1) à ladite position étendue (P2).

2. Agencement optique (1) selon la revendication 1, dans lequel ladite unité d'actionnement (5) est configurée pour générer le mouvement d'au moins ledit premier groupe d'optiques (3) de ladite position étendue (P2) à ladite position rétractée (P1),
-- ledit actionneur (6) étant configuré pour tourner autour dudit axe optique (A1) dans une seconde direction (D2),
-- ledit premier élément de retenue (7) étant configuré pour se déplacer le long dudit axe optique (A1) et pour tourner autour dudit axe optique (A1) en réponse à ladite rotation dudit actionneur (6),
-- ledit second élément de retenue (8) étant configuré pour tourner de ladite position désengagée (P4) à ladite position de contact (P3),
ledit bossage (11) de ladite base (10) étant configuré pour
-- entrer en contact avec et maintenir ledit premier élément de retenue (7) dans ladite seconde position rotative (R2), de sorte que ladite rotation dudit actionneur (6) est convertie en un mouvement de déplacement dudit premier élément de retenue (7) de ladite première position linéaire (L1) à ladite seconde position linéaire (L2), le mouvement dudit premier élément de retenue (7) de ladite première position linéaire (L1) à ladite seconde position linéaire (L2) générant ledit mouvement dudit premier groupe d'optiques (3) de ladite position étendue (P2) à ladite position rétractée (P1),
et
-- pour désengager ledit premier élément de retenue (7) lorsque ledit premier élément de retenue (7) atteint ladite seconde position linéaire (L2),
de sorte que ladite rotation dudit actionneur (6) génère un mouvement rotatif dudit premier élément de retenue (7) de ladite seconde position rotative (R2) à ladite première position rotative (R1), dans laquelle première position rotative (R1) ledit premier élément de retenue (7) est mobile de ladite seconde position linéaire (L2) à ladite première position linéaire (L1) au moyen de la décompression dudit élément élastique (9).

3. Agencement optique (1) selon la revendication 1 ou 2, dans lequel ledit premier groupe d'optiques (3) comprend au moins une lentille (3a) et un premier boîtier (3b) et ledit second groupe d'optiques (4) comprend au moins une lentille (4a) et un second boîtier (4b).

4. Agencement optique (1) selon la revendication 3, dans lequel ledit premier élément de retenue (7) comprend une première rainure (12a), ledit second élément de retenue (8) comprend une seconde rainure (12b), et ledit premier boîtier (3b) comprend au moins une languette (12c) configurée pour entrer en contact avec l'une de ladite première rainure (12a) et de ladite seconde rainure (12b),
ladite première rainure (12a) et ladite seconde rainure (12b) étant configurées pour s'aligner lorsque ledit premier élément de retenue (7) est dans ladite seconde position linéaire (L2) et que ledit second élément de retenue (8) est dans ladite position de contact (P3), permettant à ladite languette (12c) de glisser de ladite seconde rainure (12b) vers ladite première rainure (12a) de sorte que ledit premier groupe d'optiques (3) peut être libéré dudit second élément de retenue (8) et que le mouvement dudit premier groupe d'optiques (3) de ladite position rétractée (P1) à ladite position étendue (P2) est autorisé, et ladite première rainure (12a) et ladite seconde rainure (12b) étant configurées pour se désaligner lorsque ledit premier élément de retenue (7) est dans ladite première position linéaire (L1) et que ledit second élément de retenue (8) est dans ladite position de contact (P3), permettant à ladite languette (12c) d'entrer en contact avec ladite seconde rainure (12b) de sorte que ledit second élément de retenue (8) maintient ledit premier groupe d'optiques (3) dans ladite position rétractée (P1).

5. Agencement optique (1) selon la revendication 3 ou 4, dans lequel l'un de ladite base (10) et dudit premier boîtier (3b) comprend une fente (13) s'étendant parallèlement audit axe optique (A1) et l'autre de ladite base (10) et dudit premier boîtier (3b) comprend une protubérance (14) entrant en contact avec ladite fente (13), ladite fente (13) comprenant des extrémités fermées disposées de manière opposée limitant une plage de mouvement de ladite protubérance (14) à l'intérieur de ladite fente (13) et limitant une plage de mouvement dudit premier groupe d'optiques (3) par rapport à ladite base (10) le long dudit axe optique (A1).

6. Agencement optique (1) selon l'une quelconque des revendications précédentes, dans lequel
ledit mouvement de déplacement dudit premier élément de retenue (7) dans une première direction (D3) le long dudit axe optique (A1), de ladite première position linéaire (L1) à ladite seconde position linéaire (L2), génère la compression dudit élément élastique (9), et
dans lequel ledit mouvement de déplacement dudit premier élément de retenue (7) dans une seconde direction (D4) le long dudit axe optique (A1), de ladite seconde position linéaire (L2) à ladite première position linéaire (L1), facilite la décompression dudit élément élastique (9).

7. Agencement optique (1) selon l'une quelconque des revendications précédentes, dans lequel le degré de compression dudit élément élastique (9) est plus grand dans ledit second état de compression (S2) que dans ledit premier état de compression (S1).

8. Agencement optique (1) selon l'une quelconque des revendications précédentes, dans lequel
ledit élément élastique (9) est configuré pour transférer ladite rotation dudit premier élément de retenue (7) audit second élément de retenue (8), ou
dans lequel ledit premier élément de retenue (7) et ledit second élément de retenue (8) sont emboîtés au moyen de première et deuxième pièces d'engagement mécanique (19a, 19b), lesdites première et deuxième pièces d'engagement mécanique (19a, 19b) étant configurées pour transférer ladite rotation dudit premier élément de retenue (7) audit second élément de retenue (8).

9. Agencement optique (1) selon l'une quelconque des revendications précédentes, dans lequel ledit actionneur (6) comprend un premier élément d'actionnement (6a) configuré pour tourner autour dudit axe optique (A1) et pour, lorsqu'il tourne dans ladite première direction (D1), appliquer une force (F) sur une surface (15a) dudit premier élément de retenue (7) s'étendant à un premier angle (α) par rapport audit axe optique (A1), ladite force (F) poussant ledit premier élément de retenue (7) de ladite première position linéaire (L1) à ladite seconde position linéaire (L2).

10. Agencement optique (1) selon la revendication 9, dans lequel ledit premier élément d'actionnement (6a) est configuré pour, lorsqu'il tourne dans ladite seconde direction (D2), permettre audit premier élément de retenue (7) de passer de ladite seconde position linéaire (L2) à ladite première position linéaire (L1).

11. Agencement optique (1) selon la revendication 9 ou 10, dans lequel ledit premier élément de retenue (7) comprend une première surface de came (15a) s'étendant selon un premier angle (α) par rapport audit axe optique (A1) et une seconde surface de came (15b) s'étendant selon un second angle (β) par rapport audit axe optique (A1), dans lequel ledit premier élément d'actionnement (6a) comprend une première surface de came (16a) s'étendant selon un premier angle (α) par rapport audit axe optique (A1) et une seconde surface de came (16b) s'étendant selon un second angle (β) par rapport audit axe optique (A1), et
dans lequel lesdites premières surfaces de came (15a, 16a) sont en butée l'une contre l'autre le long d'un premier axe de contact (A2) et lesdites secondes surfaces de came (15b, 16b) sont en butée l'une contre l'autre le long d'un second axe de contact (A3) lorsque ledit premier élément de retenue (7) est dans ladite première position linéaire (L1), et
dans lequel lesdites premières surfaces de came (15a, 16a) sont décalées l'une par rapport à l'autre le long dudit premier axe de contact (A2) et lesdites secondes surfaces de came (15b, 16b) sont décalées l'une par rapport à l'autre le long dudit second axe de contact (A3) lorsque ledit premier élément de retenue (7) est dans ladite seconde position linéaire (L2).

12. Agencement optique (1) selon la revendication 11, dans lequel ladite première surface de came (15a) et ladite seconde surface de came (15b) dudit premier élément de retenue (7) forment ensemble un évidement en forme de V, et dans lequel ladite première surface de came (16a) et ladite seconde surface de came (16b) dudit premier élément d'actionnement (6a) forment une protubérance en forme de V, ledit évidement en forme de V et ladite protubérance en forme de V étant disposés de sorte que ledit évidement en forme de V enveloppe complètement ladite protubérance en forme de V lorsque ledit premier élément de retenue (7) est dans ladite première position linéaire (L1).

13. Agencement =- optique (1) selon l'une quelconque des revendications 9 à 12, dans lequel ledit actionneur (6) comprend un second élément d'actionnement (6b), ledit premier élément d'actionnement (6a) étant configuré pour tourner autour dudit axe optique (A1) en réponse à la rotation dudit second élément d'actionnement (6b).

14. Agencement optique (1) selon la revendication 13, dans lequel ledit second élément d'actionnement (6b) est configuré pour être mis en rotation au moyen d'une force externe, ledit second élément d'actionnement (6b) et ledit premier élément d'actionnement (6a) étant configurés pour s'emboîter au moyen de troisième et quatrième pièces de mise en contact mécanique (20a, 20b), lesdites troisième et quatrième pièces de mise en contact mécanique (20a, 20b) étant configurées pour permettre audit second élément d'actionnement (6b) de tourner selon un angle différent autour dudit axe optique (A1) par rapport audit premier élément d'actionnement (6a).

15. Appareil électronique comprenant l'agencement optique selon l'une quelconque des revendications 1 à 14.
